(19) Europäisches Patentamt
European Patent Office
Office européen des brevets

(11) **EP 2 959 331 B1**

(12) **EUROPÄISCHE PATENTSCHRIFT**

(45) Veröffentlichungstag und Bekanntmachung des Hinweises auf die Patenterteilung:
**11.01.2023 Patentblatt 2023/02**

(21) Anmeldenummer: **14705802.8**

(22) Anmeldetag: **24.02.2014**

(51) Internationale Patentklassifikation (IPC):
**G02B 5/18** (2006.01)    **G02B 27/09** (2006.01)
**G02B 5/02** (2006.01)

(52) Gemeinsame Patentklassifikation (CPC):
**G02B 5/0221; G02B 5/18**

(86) Internationale Anmeldenummer:
**PCT/EP2014/053543**

(87) Internationale Veröffentlichungsnummer:
**WO 2014/128298 (28.08.2014 Gazette 2014/35)**

(54) **ELEKTROMAGNETISCHE STRAHLUNG STREUENDES ELEMENT**

ELECTROMAGNETIC RADIATION-SCATTERING ELEMENT

ÉLÉMENT DISPERSANT LE RAYONNEMENT ÉLECTROMAGNÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.02.2013 DE 102013003441**

(43) Veröffentlichungstag der Anmeldung:
**30.12.2015 Patentblatt 2015/53**

(73) Patentinhaber: **Fraunhofer-Gesellschaft zur Förderung
der angewandten Forschung e.V.
80686 München (DE)**

(72) Erfinder:
• **ECKSTEIN, Hans-Christoph
07745 Jena (DE)**
• **ZEITNER, Uwe
99423 Weimar (DE)**

(74) Vertreter: **Pfenning, Meinig & Partner mbB
Patent- und Rechtsanwälte
An der Frauenkirche 20
01067 Dresden (DE)**

(56) Entgegenhaltungen:
WO-A1-03/029768        WO-A1-2011/149715
US-A1- 2003 214 718    US-A1- 2006 279 679
US-A1- 2010 167 019    US-A1- 2010 177 398
US-A1- 2012 268 964

• LARS-CHRISTIAN WITTIG: "kontinuierliche oberflächenprofile zur optischen strahlformung", DISSERTATION, RAT DER PHYSIKALISCH ASTRONOMISCHEN FAKULTAT, FRIEDRICH SCHILLER UNIVERSITÄT, JENA, 6 July 2005 (2005-07-06), pages 1-109, XP002751360,

**Beschreibung**

Die Erfindung betrifft ein elektromagnetische Strahlung diffus streuendes optisches Element sowie ein Verfahren zu seiner Herstellung. Solche optischen Elemente können in nahezu allen Projektionsanwendungen, wie Front- und Rückprojektion, Displayanwendungen, (Kino-) Leinwände und Ähnlichem eingesetzt werden. Außerdem können die beschriebenen Strukturen zur Homogenisierung und Ausrichtung von Lichtquellen verwendet werden. Dadurch erschließen sich auch Anwendungsgebiete in der Allgemeinbeleuchtung, wobei eine Verteilung der Leuchtdichte durch einen solchen Diffusor gesteuert werden kann. Weiterhin können diese optischen Elemente für Anwendungen im Bereich statischer Projektion und zur strukturierten Beleuchtung beispielsweise zur Erzeugung von Mustern, Symbolen, Schriftzügen oder Logos eingesetzt werden.

Diffusoren und Streuscheiben werden in vielen Mikrodisplay- und Projektionsanwendungen eingesetzt. Dabei entsteht das Bild auf einem streuenden Schirm, der vom Zuschauer direkt oder in einer Zwischenbildebene eines optischen Systems betrachtet werden kann. Die Aufgabe des Diffusors ist es dabei, das Licht von der Bildebene möglichst gleichmäßig in das Raumgebiet zu streuen, in dem sich beispielsweise Betrachter befinden können. In den meisten Anwendungen ist es möglich, dieses Raumgebiet, die so genannte Eyebox, stark zu begrenzen. Dabei soll im Idealfall das gesamte Licht vom Diffusor in die Eyebox gestreut werden. Bei einer homogenen Verteilung der Leuchtdichte innerhalb der Eyebox, bei gleichzeitig minimaler Intensität außerhalb, ist die Effizienz des Projektors optimal und es treten keine Helligkeitsschwankungen im Falle einer Ortsveränderung oder des Blickwinkels des Betrachters lateral zum Projektionsschirm auf.

Eine weitere wichtige Anforderung für diese Diffusoren ist deren Breitbandigkeit, da in nahezu allen Projektionsanwendungen Wellenlängen im gesamten sichtbaren Spektralbereich von Bedeutung sind und daher die Streuung möglichst wellenlängenunabhängig sein soll.

Weiterhin können Diffusoren dafür verwendet werden eine bestimmte Abstrahlcharakteristik zu realisieren, wie es beispielsweise bei Beleuchtungsanwendungen von Bedeutung ist. Es lassen sich damit spezifische Winkelverteilungen der Lichtquelle erzeugen. Beispielsweise ist es möglich, aus einer kollimierten Lichtquelle eine beliebige Intensitätsverteilung im Fernfeld zu generieren. Mit sehr stark kollimierten Quellen. wie z.B. Lasern kann dies zur Erzeugung von Bildern verwendet werden und im Bereich der statischen Bilderzeugung (Projektion von Schriftzügen, Logos, Grafiken) Anwendung finden. Es ist zudem möglich ein Streuelement ortsaufgelöst zu definieren, also lateral verschiedene Streufunktionen zu verwenden. Dies kann zum Beispiel genutzt werden, um eine Kippung der Streuverteilung gemäß einer Linsenfunktion zu realisieren, eine Lichtquelle zu kollimieren oder bei ausgedehnten Streuschirmen Parallaxenfehler zu kompensieren.

Mit diffraktiven optischen Elementen ist es möglich, die Charakteristik einer Streuverteilung der elektromagnetischen Strahlung genau zu definieren. Dabei wird das Oberflächenprofil eines diffraktiven optischen Elementes durch einen iterativen Fourier Transform Algorithmus (IFTA) berechnet. Die Streuverteilung kann dabei bezüglich Intensität und Winkelverteilung nahezu beliebig vorgegeben werden. In Praxis haben diffraktive Diffusoren bisher jedoch kaum Bedeutung, da diese eine starke Wellenlängenabhängigkeit besitzen und nur ein begrenzter Anteil des Lichtes diesen Diffusor gestreut passiert. Ein nicht zu vernachlässigbarer Anteil passiert das Element ungehindert und ergibt eine störende 0. Beugungsordnung, die sich in der direkten Sichtbarkeit der jeweiligen Lichtquelle für den Betrachter äußert. Zudem ist die Herstellung solcher Elemente, speziell wenn hohe Abstrahlwinkel gefordert sind, mit heutigen Technologien kaum oder nur unter erheblichem Aufwand realisierbar.

Neben diffraktiven Diffusoren gibt es eine Reihe von Möglichkeiten optische Elemente herzustellen, bei denen sich die Winkelverteilung bzw. die Abstrahlcharakteristik jedoch nicht beliebig und ortsaufgelöst einstellen lässt. Zu nennen wären hier mechanisch oder durch Laserbearbeitung aufgeraute Flächen, eingebettete kleine Kugeln deren Brechungsindex sich von dem optischen Brechungsindex des umgebenden Materials stark unterscheidet oder durch Interferenzlithographie hergestellte Elemente. Bei diesen Verfahren oder Ausführungen ist es nachteilig, dass sich die Streuverteilung nur in gewissen Grenzen vorgeben lässt und keine beliebigen Intensitätsverteilungen in einer Eyebox generiert werden können.

Eine verbreitete Möglichkeit zur Realisierung von Streuscheiben und Diffusoren, speziell bei inkohärenter Beleuchtung, stellen Linsenarrays dar. Durch die periodischen oder regelmäßigen Strukturen, die in einem Linsenarray auftreten, kommt es im Falle einer stark kollimierten oder spektral schmalbandigen Beleuchtung zu ungewünschten Beugungsmustern. Technologisch bedingt, lässt sich der Füllfaktor von Linsenarrays zumeist nicht beliebig hoch realisieren. So genannte Totzonen zwischen den Linsen bewirken dann, dass das Licht den Diffusor ungestreut passiert (ähnlich zur 0. Beugungsordnung bei diffraktiven Elementen). Zusätzlich sind Streuverteilungen, die sich mit Mikrolinsenarrays realisieren lassen, bezüglich ihrer Form und Intensitätsverteilung stark begrenzt. Sie beschränken sich zumeist auf die Ausleuchtung geometrisch einfacher Formen, wie Rechtecke oder Kreise.

Eine weitere Möglichkeit stellen Volumenhologramme oder so genannte effektive Medium CGHs dar, deren Herstellung sehr aufwändig ist und die sich nicht wie oberflächenstrukturierte Optiken durch Abformung, Spritz- oder Prägeverfahren replizieren bzw. kopieren lassen und die außerdem nur für einen schmalen Wellenlängenbereich, wie gewünscht funktionieren.

In US 2003/0214718 A1 ist ein lichtreflektierendes Element mit variabler diffuser Lichtreflexion beschrieben.

Aus WO 2011/149715 A1 ist eine Schicht, mit der Licht zurück gerichtet werden kann und ein Displaysystem, mit solchen optischen Schichten bekannt.

US 2012/0268964 A1 offenbart eine Diffusorschicht mit kontrollierter Lichtkollimation.

Ein optisches Element und ein Herstellungsverfahren dazu sind in US 2010/0177398 A1 beschrieben.

US 2006/0279679 A1 offenbart eine Schicht, die Licht kondensiert und ein Herstellungsverfahren.

In US 2010/167019 A1 ist eine Schicht mit zufällig angeordneten Erhebungen beschrieben.

Ebenfalls sind Algorithmen bekannt, mit denen eine vorgegebene Oberflächenstrukturierung erreichbar ist, wie z.B. in Lars-Christian Wittig: "Kontinuierliche Oberflächenprofile zur optischen Strahlformung", Dissertation, Rat der Physikalisch Astronomischen Fakultät, Friedrich Schiller Universität, Jena, 6. Juli 2005, Seiten 1-109, XP002751360.

Es ist daher Aufgabe der Erfindung, Möglichkeiten anzugeben mit denen eine über eine Fläche gleichmäßige Leuchtdichte oder ein lokal gezielt beeinflusstes Streuverhalten, von auf ein optisches Element gerichteter elektromagnetischer Strahlung, zu erreichen sowie eine direkte lokal begrenzte Abbildung der Strahlungsquelle mit der nullten Beugungsordnung zu vermeiden oder diese zumindest in ihrer Intensität zu reduzieren. Erfindungsgemäß wird diese Aufgabe mit einem optischen Element, bei dem die Merkmale des Anspruchs 1 realisiert sind, gelöst werden. Es kann mit einem Verfahren nach Anspruch 5 hergestellt werden. Vorteilhafte Ausgestaltungen und Weiterbildungen der Erfindung können mit in untergeordneten Ansprüchen bezeichneten Merkmalen erreicht werden.

Ein erfindungsgemäßes elektromagnetische Strahlung diffus streuendes optisches Element kann aus einem für die elektromagnetische Strahlung transparenten Werkstoff gebildet und für elektromagnetische Strahlung aus dem Wellenlängenspektrum des Lichts ausgelegt sein.

An einer Oberfläche ist ein Oberflächenprofil, das keine sich wiederholende regelmäßige Oberflächenstruktur bildet, vorhanden.

Dabei sind Erhebungen als Strukturelemente der Oberflächenstruktur ausgebildet, die eine Höhe aufweisen, mit der ein Phasenhub $\Delta\varphi$, der größer als das Zweieinhalbfache der größten eingesetzten Wellenlänge ist, erreicht wird.

Die Erhebungen weisen eine laterale Ausdehnung in jeweils einer Ebene in alle Achsrichtungen auf, die größer als das Fünffache der größten eingesetzten Wellenlänge ist.

Die einzelnen Erhebungen sind in den drei Raumachsrichtungen kontinuierlich ausgebildet und dabei sind an den Erhebungen keine Kanten, Absätze, Sprünge sowie keine Profilierung ausgebildet und es sind keine Erhebungen der Form einer Fläche zweiter Ordnung vorhanden.

Unter der Höhe von Erhebungen soll der Abstand zwischen der Position, mit der eine Erhebung am weitesten vom tiefsten Punkt einer neben der Erhebung ausgebildeten Vertiefung entfernt ist, verstanden werden.

Die laterale Ausdehnung soll dabei in allen Achsrichtungen, also um 360° um den Flächenschwerpunkt der größten Querschnittsfläche einer Erhebung so groß sein, wie das Fünffache der größten eingesetzten Wellenlänge mit der das Element bestrahlt wird.

Unter kontinuierlicher Ausbildung in den drei Raumachsrichtungen soll eine nichtsymmetrische Ausbildung bzw. geometrische Gestalt verstanden werden, bei der sich die Oberfläche von einer Position zu jeder benachbarten Position kontinuierlich verändert und es daher keine Kannten, Absätze, Sprünge oder eine Profilierung gibt. Trotz einer sich stetig ändernden Kontur entlang der Oberfläche, sollen jedoch möglichst keine konstant beibehaltenen Neigungswinkel oder eine einem Radius folgende der Oberflächenkontur in den drei Raumachsrichtungen (x-, y- und z-Richtung) auftreten. Der Neigungs- bzw. Krümmungswinkel entlang der Oberfläche soll nicht gleich sein oder sich nicht gleichmäßig ändern, soll sich aber nicht sprunghaft ändern. Dies unterscheidet sich von den bekannten Mikrolinsen, bei denen sich der Anstieg an Grenzen zwischen nebeneinander angeordneten Mikrolinsen sprunghaft ändert.

Bei der Erfindung sollen die geometrische Gestalt und Dimensionierung jeder einzelnen Erhebung mittels eines deterministischen Rechenalgorithmus berechnet werden und dadurch keine zufällige Ausbildung von Erhebungen auftreten. Insbesondere soll die Berechnung mit einem iterativen Fourier-Transformations Algorithmus durchgeführt werden.

Bei Einsatz kollimierter elektromagnetischer Strahlung wirkt sich ein erfindungsgemäßes Element vorteilhaft aus. So kann beispielsweise ein kollimierter Laserstrahl auf die Oberfläche an der das Oberflächenprofil ausgebildet ist, gerichtet werden. Durch die erreichbare Streuwirkung kann eine deutlich größere Fläche beleuchtet sein oder leuchtend erscheinen, als dies die Fläche des Strahlquerschnitts des Laserstrahls erwarten lässt. Durch die mögliche Vermeidung bzw. Unterdrückung der nullten Beugungsordnung ist auch die punktförmige Laserstrahlquelle nicht bzw. nur sehr undeutlich sichtbar oder wird so abgebildet.

Es soll keine Erhebung der Oberflächenstruktur die gleiche geometrische Gestalt und/oder Höhe und/oder ein Volumen aufweisen, die/das einer weiteren Erhebung der Oberflächenstruktur des Elementes entspricht. Jede einzelne Erhebung kann somit individuell geometrisch geformt und dimensioniert sein. Dabei können für jede Erhebung der jeweilige Einfallswinkel der elektromagnetischen Strahlung, der jeweils gewünschte Ablenkwinkel $\alpha$ der Strahlung, seine Position, die Größe bzw. der Abstand einer Eyebox, das eingesetzte Wellenlängenspektrum oder eine ausgewählte Wellenlänge elektromagnetischer Strahlung unter Berücksichtigung des optischen Brechungsindex des Werkstoffs aus dem ein erfindungsgemäßes Element berücksichtigt ist, bei der Auslegung der auszubildenden Oberflächenstruktur berücksichtigt werden. Mit den individuell gestalteten und dimensionierten Erhebungen kann eine vollständige Asymmetrie erreicht werden.

Es besteht aber auch die Möglichkeit gleich bzw. ähnlich gestaltete Erhebungen in homogener Verteilung über die bestrahlte Fläche oder in bestimmten Bereichen der bestrahlten Fläche anzuordnen. Mit letztgenannter Anordnung lassen sich lokal gezielt bestimmte optische Effekte ausnutzen, was beispielsweise einen bestimmten Farbeindruck in einem solchen Bereich betreffen kann.

Mit individuell gestalteten und dimensionierten Erhebungen ergeben sich auch unterschiedliche Abstände von höchsten Punkten von jeweils nebeneinander angeordneten Erhebungen, da die Basisgrundflächen von Erhebungen jeweils unterschiedlich gestaltet und in die möglichen Achsrichtungen lateral unterschiedliche Ausdehnungen/Längen dieser Basisgrundflächen, die von tiefsten Punkten einer um eine Erhebung herum ausgebildeten Vertiefungen vorgegeben werden.

Ein erfindungsgemäßes Element ist für ein Wellenlängenspektrum im Bereich zwischen 200 nm und 1200 nm ausgelegt.

Ein erfindungsgemäßes Element kann eine vorgebbare Streuverteilung in einem Wellenlängenbereich aufweisen, der größer ist als ± 3% einer zentralen Wellenlänge des eingesetzten Wellenlängenspektrums ist. Dies ist vorteilhaft, da sich bei diffraktiven Elementen bereits bei sehr geringer Abweichung von der Wellenlänge für die sie gefertigt sind, eine starke nullte oder höhere Beugungsordnung ausbildet.

Die Streuverteilung der eingesetzten elektromagnetischen Strahlung kann sich abhängig von der Position des Auftreffens der elektromagnetischen Strahlung (Licht) der Strahlungsquelle auf dem Element, zum Beispiel durch eine Kippung des Schwerpunktes der Streuverteilung verändern.

Die Herstellung erfolgt durch an sich bekannte Verfahren bei denen ein lokal gezielter Werkstoffabtrag erfolgt aber auch durch Abformung, (Spritz-)Gießen, (Spritz-)Prägen von einem Werkzeug.

Die Erfindung knüpft an die bereits beschriebenen diffraktiven Diffusoren an. Die Existenz der nullten Beugungsordnung und die Wellenlängenabhängigkeit dieser Elemente beruht auf der Existenz von Diskontinuitäten im Oberflächenprofil, die infolge von $2\pi$-Sprüngen in der Phasenfunktion der optischen Funktion auftreten. Die Höhe dieser Sprünge lässt sich jedoch nur für eine Wellenlänge und bei einem Werkstoff eines optischen Elements mit konstantem optischen Brechungsindex genau einstellen.

Die Phase $\varphi$ kann dabei als Quotient des Produktes der Dicke bzw. der Höhe eines Strukturelements (Erhebung) h mit der Differenz der optischen Brechungsindice zwischen dem Werkstoff des Elements und der Umgebung $\Delta n$, geteilt durch die jeweilige Wellenlänge $\lambda$ näherungsweise bestimmt werden. Demzufolge hat die Dicke oder Höhe h einen Einfluss auf den erreichbaren Phasensprung $\varphi$. Sprünge in der phasenfunktion haben die Wirkung, wie bei einem optischen Beugungsgitter.

Dabei skaliert die abgestrahlte Winkelverteilung entsprechend der Gittergleichung mit der Wellenlänge $\lambda$ und den auftretenden Perioden $p$ und der Beugungsordnung $m$.

$$\sin \alpha = \frac{m \cdot \lambda}{p}$$

Durch die Flanke des Rücksprungs entstehen sehr große Ortsfrequenzen im Oberflächenprofil, die sich bei der Fertigung von diffraktiven Elementen kaum realisieren lassen. Dies resultiert in einer Verrundung der Kanten und einer Formabweichung der Phasenfunktion was die Streuverteilung bezüglich Homogenität und Effizienz nachteilig beeinträchtigen würde. Diese und andere fertigungsbedingte Fehler im Oberflächenprofil bewirken dies.

Außerdem entstehen in konventionellen iterativen Fourier Transform Algorithmen (IFTA), die zum Design herkömmlicher Elemente verwendet werden, an einigen Positionen der optischen Funktion Punkte an denen die Phase $\varphi$ nicht definiert ist. Diese sogenannten Phasendislokationen führen ebenfalls fertigungsbedingt zu unerwünschtem Streulicht und Transmission in Richtung der nullten Beugungsordnung, was bei einer breitbandigen Beleuchtung mit elektromagnetischer Strahlung aus einem größeren Wellenlängenbereich noch verstärkt wird. Durch die Existenz von Phasendislokation ist es außerdem nicht möglich, die optische Funktion, die durch einen konventionellen IFTA berechnet wurde, in ein stetiges Oberflächenprofil zu überführen, welches keine $2\pi$-Phasensprünge enthält.

Bei der Erfindung wird eine Abwandlung eines IFTA ausgenutzt, bei dem keine Phasendislokationen auftreten. Dazu wird in dem entwickelten Designalgorithmus nicht die Phasenfunktion optimiert, sondern direkt das Oberflächenprofil mit der Größe und Höhe von Erhebungen des später danach gefertigten optischen Elementes. Während der Iteration werden auftretende Unterschiede in der Phasenfunktion ermittelt, diese werden in einem Zwischenschritt geglättet und gegebenenfalls skaliert. Über mehrere Iterationen wird diese Phasendifferenz lokal addiert und in eine Höhendifferenz umgerechnet. Dabei lässt sich auch die absolute Höhe der Oberflächenmodulation so einstellen, dass die resultierende Phasendifferenz wesentlich größer als $2\pi$ ist. Die Wellenlängenabhängigkeit der Oberflächenstruktur bleibt zwar erhalten, was bei gleicher Gitterperiode zu einer stärkeren Ablenkung der elektromagnetischen Strahlung mit zunehmender Wellenlänge $\lambda$ führt. Allerdings skaliert die Höhe des Phasenhubs $\Delta\varphi$, verursacht durch das Oberflächenprofil, umgekehrt proportional zur Wellenlänge $\lambda$.

Es gilt:

$$\sin\alpha = \frac{\lambda}{p} \Leftrightarrow \varphi = \frac{h \cdot \Delta n}{\lambda} \ ,$$

wobei P die Periodenanzahl und $\alpha$ der Winkel ist in dem die elektromagnetische Strahlung abgelenkt wird.

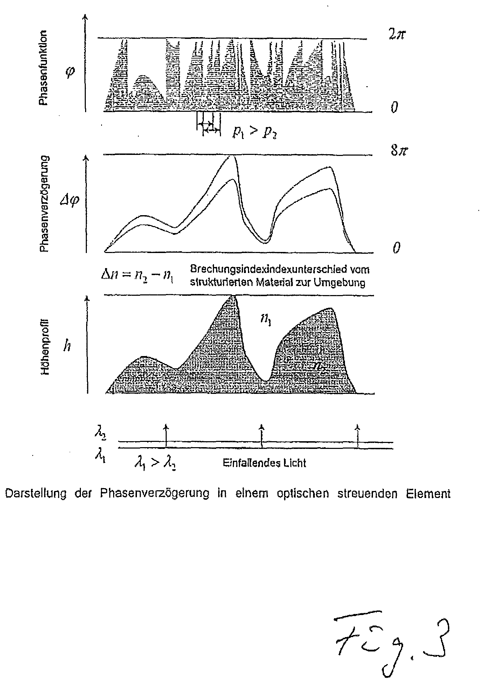

Dies führt bei steigender Höhe einer Erhebung zu einem scheinbaren Zuwachs der $2\pi$ Gitterperiode für größere Wellenlängen und damit zu einer zunehmenden Kompensation beider Effekte. In Figur 3 ist dieser Effekt für zwei Wellenlängen dargestellt. Durch die kürzere Wellenlänge des grünen Lichtes (obere Kurve) erfährt dieses eine stärkere Phasenverzögerung $\Delta\varphi$ beim Passieren der Oberflächenstruktur. Betrachtet man für eine Flanke im Oberflächenprofil, die auftretende Periodizität in der Phasenfunktion der optischen Welle, findet man eine kürzere Periode im Falle der kürzeren Wellenlänge. Die Struktur lässt sich dabei so optimieren, dass der Winkel der Ablenkung $\alpha$ für beide Wellenlängen ungefähr gleich bleibt. In gewissen Grenzen lässt sich damit eine achromatische Streuverteilung realisieren. Die untere Kurve zeigt den Verlauf bei rotem Licht.

Bei dem eingesetzten IFTA handelt sich um einen Designalgorithmus, mit dem für eine gewünschte Zielverteilung (entweder eine Winkelverteilung, oder einer Intensitätsverteilung auf einer Projektionsfläche/Schirm oder in einem bestimmten Abstand) das Oberflächenprofil des diffus streuenden Elements berechnet werden kann, das die gewünschte Verteilung unter Berücksichtigung der Eigenschaften der eingesetzten elektromagnetischen Strahlung erreicht. Die Zielverteilung kann in diesem Fall dadurch definiert, werden, dass die gewünschte Intensität der elektromagnetischen Strahlung in einem bestimmten Winkelbereich oder für bestimmte Positionen auf einer Projektionsfläche/Schrim vorgegeben wird.

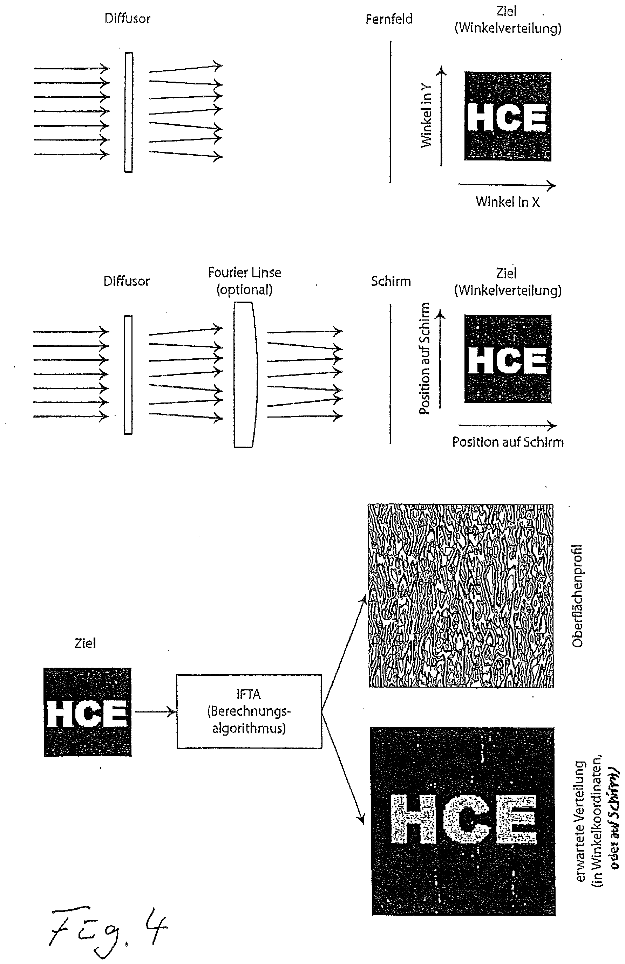

Dieser Sachverhalt ist in Figur 4 dargestellt. Es sind beispielhaft zwei Szenarien skizziert in denen für eine kollimierte Lichtquelle eine bestimmten Winkelverteilung im Beispiel die Buchstanden "HCE", generiert wird. Es kann zum Beispiel eine optische Linse verwendet werden, um diese Winkelverteilung in eine Ortsverteilung auf einer Projektionsfläche/Schirm zu transformieren. Diese Linsenfunktion könnte aber auch bereits in ein diffus streuendes erfindungsgemäßes Element integriert werden, so dass direkt auf einer Projektionsfläche/Schirm ein scharfes Bild abgebildet werden kann. Wird ein erfindungsgemäßes Element für eine Winkelverteilung im Fernfeld berechnet, entsteht das Bild quasi auf einem unendlich weit entfernten Schirm. Dabei ist in Figur 4 ein erfindungsgemäßes Element mit "Diffusor" bezeichnet.

Wird beispielsweise eine divergente Strahlungsquelle verwendet, könnte eine Linsenfunktion in ein ein diffus streuendes erfindungsgemäßes Element integriert werden, um die Strahlung zu kollimieren bzw. eine gewünschte Streuverteilung so generieren, dass lokal unterschiedliche Winkel unter denen die Strahlung auf das Element trifft durch eine lateral verschiedene Ausgestaltung des Elementes kompensiert werden können.

Die erfindungsgemäßen optischen Elemente können so verwendet werden, dass sie die jeweilige elektromagnetische Strahlung transparent sind. Sie können die elektromagnetische Strahlung auch reflektieren. Dafür kann die das Oberflächenprofil aufweisende Oberfläche oder die dieser Oberfläche abgewandte Oberfläche mit einer reflektierenden Beschichtung versehen sein.

Wie eingangs beschrieben, wird Energie in der nullten Beugungsordnung bei diffraktiven optischen Elementen durch eine Reihe von Effekten verursacht. Der stärkste Effekt ist dabei, dass höhere Wellenlängen nicht den erforderlichen Phasenhub $\Delta\varphi$ von $2\pi$ erhalten und bei niedrigeren Wellenlängen undefinierte Sprünge in der Phasenfunktion auftreten. Weiterhin entsteht durch die fertigungstechnische Limitierung der Flankensteilheit der Oberfläche von Erhebungen des Oberflächenprofils ein Fehler im Rücksprung und an Positionen von Phasendislokationen. Aufgrund der Formabweichung kann es ebenfalls zu Streulicht und zu einer Verstärkung der nullten Beugungsordnung kommen. Die beschriebenen Effekte werden bei der Erfindung vermieden, da keine Sprünge auftreten. Die Existenz von Energie in der nullten Beugungsordnung kann damit nahezu vollständig und breitbandig unterdrückt werden. Eine Strahlungsquelle wird als solche nicht mehr punktuell sichtbar. Zumindest ist deren Abbildung aber so stark abgeschwächt, dass sie für einen Betrachter nahezu nicht sichtbar ist.

Durch die Realisierung tieferer Strukturen, bei denen Erhebungen eine größere Höhe über eine Ausgangsbasis haben, reduziert sich die Größe der auftretenden Ortsfrequenzen in der Struktur, wodurch die minimale Größe der zu strukturierenden Oberflächenmodulationen vergrößert wird. Verglichen mit herkömmlichen diffraktiven Elementen lässt sich so mit vergleichbarer Fertigungstechnologie eine Abstrahlung in größere Winkelbereiche realisieren. Außerdem lassen sich Effekte, die während des Fertigungsprozesses die Oberflächenform des Zielprofils verändern, im Design berücksichtigen und kompensieren, was eine exakte Definition der Streuverteilung der elektromagnetischen Strahlung ermöglicht.

Über die vergrößerte Gesamttiefe des Elementes bzw. Höhe von Erhebungen lässt sich eine breitbandige Wirkung der Streufunktion einstellen. Die beschriebenen Elemente können dabei für das gesamte sichtbare Spektrum elektromagnetischer Strahlung und ggf. darüber hinaus bis hin zu NIR- oder gar IR-Strahlung verwendet werden.

Bei der erfindungsgemäß ausgebildeten Oberflächenstruktur treten keine periodischen Wiederholungen auf. Anders als bei Linsenarrays, lässt sich deswegen das Auftreten von unerwünschten Beugungsmustern nahezu vollständig vermeiden. Weiterhin bietet dies im Falle von digitalen Projektoren den Vorteil, dass es nicht zur Ausbildung von Mustern oder zu Moire-Effekten kommt. Diese werden hervorgerufen, wenn sich die periodische Substruktur eines Schirmes mit ähnlichen Perioden, beispielsweise dem regelmäßigen Pixelraster des projizierten Bildes, überlagern.

Durch die gezielte Einführung von Flanken an Erhebungen in das Oberflächenprofil lassen sich auch asymmetrische Streuverteilungen realisieren. Dabei ist darauf zu achten, dass die Orientierung der eingeführten Flanken möglichst statistisch über das Element von 0°-360° variiert wird und die von den Flanken berandeten Flächen zusammenhängend, von ähnlicher Größe, und polygonal oder krummlinig begrenzt sind. Die durch die Flanken entstehende Streuung lässt sich in die Ziel-Streufunktion integrieren, wobei die Position und die Orientierung der Flanken berechnet bzw. berücksichtigt werden kann.

Im Falle, dass eine Asymmetrie über die nutzbare Fläche des optischen Elements örtlich variiert werden soll, können beliebige optische Funktionen zur lokalen Kippung der Orientierung des Lichtflusses (lokal gezielte Veränderung der abgelenkten Strahlung) verwendet werden, wodurch sich Linsenfunktionen und ähnliches in erfindungsgemäße Elemente integrieren lassen.

So können in der Oberflächenstruktur Bereiche ausgebildet sein, mit denen eine lokal gezielte Ablenkung der elektromagnetischen Strahlung erreichbar ist.

So kann mit einer in das Element integrierten Linsenfunktion beispielsweise eine Anwendungen für Head-Up-Displays möglich werden. Es ist damit aber auch eine Kollimation der elektromagnetischen Strahlung möglich, oder wie in Figur 4 gezeigt eine gleichmäßige Abbildung in kurzen Distanzen möglich.

Es ist dadurch außerdem möglich sicherzustellen, dass verschiedene Bereiche auf dem die elektromagnetische Strahlung streuenden Element in die gleiche Eyebox streuen. Dies ist insbesondere dann relevant, wenn die laterale Ausdehnung des Elementes relativ zum Betrachter an Bedeutung gewinnt, sei es durch die Nähe des Betrachters zum Element oder durch die große flächige Ausdehnung des Elements. Bei Anwendungen in denen das Element in einer Zwischenbildebene eines optischen Systems eingesetzt wird, kann eine örtlich variierende Kippung der Hauptstrahlen mit entsprechenden Ablenkungswinkeln eingestellt werden. So kann beispielsweise eine Feldlinse realisiert werden.

Im Falle von konventionellen diffraktiven Elementen kommt es bei schräger Beleuchtung/Bestrahlung zur Abschattung der beleuchteten Fläche durch Rücksprünge, weswegen diese Elemente meistens nahezu senkrecht beleuchtet werden müssen. Bei den erfindungsgemäßen Elementen sind Abschaltungseffekte je nach Aspektverhältnis der Strukturelemente der Oberflächenstrukturierung deutlich geringer, sodass diese auch unter schräger Beleuchtung/Bestrahlung verwendet werden können.

Mit einem erfindungsgemäßen Element kann ein Phasenhub von deutlich mehr als $2\pi$ erreicht werden, dessen Streuverteilung extrem definiert, asymmetrisch und durch starke Modulation oder Kanten gekennzeichnet ist. Außerdem kann eine wellenlängenunabhängige Funktion, ohne die Existenz einer nullten Ordnung erreicht werden. Der Anteil der nicht vollständig unterdrückten Strahlung der nullten Beugungsordnung kann zumindest unterhalb von 5 % gehalten werden.

Nachfolgend soll die Erfindung beispielhaft näher erläutert werden.

Dabei zeigen:

Figur 1 eine schematische Ansicht von oben auf ein Beispiel eines erfindungsgemäßen Elements, bei dem Erhebungen mittels Höhenlinien kenntlich gemacht sind und die gestrichelt dargestellten Linien eine Höhe von $2\pi$ für eine Wellenlänge von 550 nm angeben.

Figur 2 eine Draufsicht in schematischer Darstellung mit kleinerem Maßstab und

Figur 3 Diagramme mit denen die Phasenverzögerung in einem optischen streuenden Element verdeutlicht werden soll.

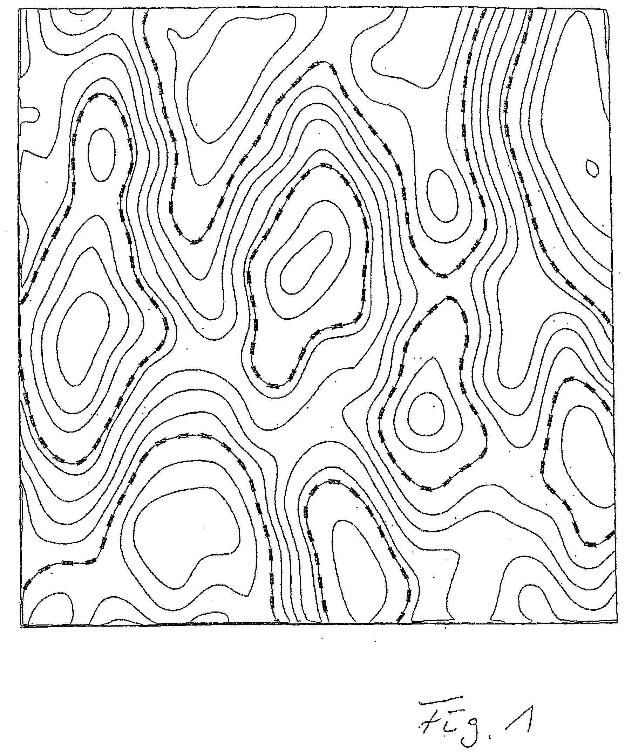

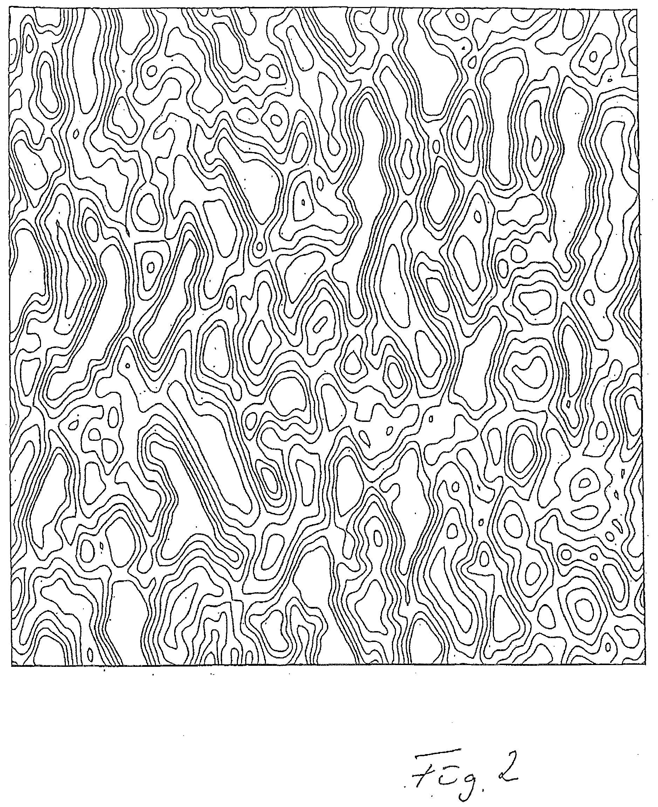

Mit den beiden Darstellungen der Figuren 1 und 2 ist es deutlich erkennbar, dass Erhebungen individuell gestaltet und dimensioniert sind. Mit den Höhenlinien ist es erkennbar, dass keine scharfen Kanten oder Abstufungen oder abrupte Sprünge in der Höhe an den Erhebungen vorhanden sind. Die Höhenlinien bilden geschlossene kurvenartige Verläufe und es treten keine Richtungswechsel auf die einen Winkel < 5° einschließen würden. Es sollte eine stetige Änderung des Anstiegs an den gekrümmten/gewölbten Oberflächen von Erhebungen eingehalten sein.

Figur 4 zeigt beispielhaft Einsatzmöglichkeiten eines erfindungsgemäßen diffus streuen und Elements.

Dabei wird eine vordefinierte Winkelverteilung/Intensitätsverteilung im Fernfeld bzw. Intensitätsverteilung auf einer Projektionsfläche/Schirm in einem bestimmten Abstand zu dem Element, unter Berücksichtigung der Eigenschaften der elektromagnetischen Strahlung der Quelle realisiert. Aus der gewünschten Winkelverteilung wird mittels des IFTA- Designalgorithmus das Oberflächenprofil berechnet. Die gewünschte Winkelverteilung wird dabei meist nicht exakt erreicht, kann allerdings in guter Näherung und mit hoher Effizienz erreicht werden.

## Patentansprüche

1. Elektromagnetische Strahlung diffus streuendes optisches Element,

    an dessen Oberfläche ein Oberflächenprofil mit Erhebungen vorhanden ist, das für ein Wellenlängenspektrum im Bereich zwischen 200 nm und 1200 nm ausgelegt ist und keine sich wiederholende regelmäßige Oberflächenstruktur bildet,
    wobei die Erhebungen eine Höhe aufweisen, mit der ein Phasenhub $\Delta\varphi$, der größer als das Zweieinhalbfache der größten eingesetzten Wellenlänge ist, erreichbar ist und die Erhebungen eine laterale Ausdehnung in jeweils einer Ebene in alle Achsrichtungen aufweisen, die größer als das Fünffache der größten eingesetzten Wellenlänge ist,
    die einzelnen Erhebungen in den drei Raumachsrichtungen kontinuierlich ausgebildet und dabei an den Erhebungen keine Kanten Absätze sowie Sprünge ausgebildet sind,
    an den Erhebungen keine Flächen zweiter Ordnung vorhanden sind und
    keine Erhebung der Oberflächenstruktur die gleiche geometrische Gestalt und/oder Höhe und/oder ein gleiches Volumen aufweist, die/das einer weiteren Erhebung der Oberflächenstruktur des Elementes entspricht.

2. Element nach Anspruch 1, **dadurch gekennzeichnet, dass** die das Oberflächenprofil aufweisende Oberfläche oder die dieser Oberfläche abgewandte Oberfläche mit einer reflektierenden Beschichtung beschichtet ist.

3. Element nach einem der vorhergehenden Ansprüche, **dadurch gekennzeichnet, dass** es elektromagnetische Strahlung aus dem Wellenlängenspektrum des sichtbaren Lichts streut.

4. Element nach einem der vorhergehenden Ansprüche, **dadurch gekennzeichnet, dass** es aus einem Material besteht, das für die elektromagnetische Strahlung im eingesetzten Wellenlängenspektrum transparent ist.

5. Verfahren zur Herstellung eines elektromagnetische Strahlung diffus streuenden optischen Elements nach einem der vorhergehenden Ansprüche, **dadurch gekennzeichnet, dass** ein Oberflächenprofil, das für ein Wellenlängenspektrum im Bereich zwischen 200 nm und 1200 nm ausgelegt ist, und keine sich wiederholende regelmäßige Oberflächenstruktur bildet, mit einem deterministischen Rechenalgorithmus so berechnet wird, dass

Erhebungen ausgebildet sind, die eine Höhe aufweisen, mit der ein Phasenhub $\Delta\varphi$, der größer als das Zweieinhalbfache der größten eingesetzten Wellenlänge ist, erreichbar ist und die Erhebungen eine laterale Ausdehnung in jeweils einer Ebene in alle Achsrichtungen aufweisen, die größer als das Fünffache der größten eingesetzten Wellenlänge ist, und
die einzelnen Erhebungen in den drei Raumachsrichtungen kontinuierlich ausgebildet und dabei an den Erhebungen keine Kanten Absätze sowie Sprünge ausgebildet sind und
an Erhebungen keine Fläche zweiter Ordnung vorhanden sind und
die erste Ableitung des Oberflächenprofils stetig ist und
keine Erhebung der Oberflächenstruktur die gleiche geometrische Gestalt und/oder Höhe und/oder ein gleiches Volumen aufweist, die/das einer weiteren Erhebung der Oberflächenstruktur des Elementes entspricht, wobei die Berechnung des Oberflächenprofils mit einem iterativen Fourier Transformations Algorithmus durchgeführt wird, bei dem in dem entwickelten Designalgorithmus nicht die Phasenfunktion optimiert, sondern direkt das Oberflächenprofil mit der Größe und Höhe von Erhebungen des später danach gefertigten optischen Elementes berücksichtigt wird und während der Iteration auftretende Unterschiede in der Phasenfunktion ermittelt und diese in einem Zwischenschritt geglättet und gegebenenfalls skaliert werden, wobei über mehrere Iterationen diese Phasendifferenz lokal addiert und in eine Höhendifferenz umgerechnet wird und dabei auch die absolute Höhe der Oberflächenmodulation so eingestellt wird, dass die resultierende Phasendifferenz wesentlich größer als $2\pi$ ist und
dieses Oberflächenprofil mit lokal gezieltem Werkstoffabtrag, durch Abformung, (Spritz-)Gießen, (Spritz-)Prägen von einem Werkzeug ausgebildet wird.

## Claims

1. An optical element diffusely scattering electromagnetic radiation, on the surface of which there is a surface profile with elevations designed for a wavelength spectrum in the range between 200 nm and 1200 nm and which does not form a repeating regular surface structure, wherein the elevations have a height with which a phase deviation $\Delta\varphi$, which is greater than two and a half times the greatest wavelength used, is achievable and the elevations have a lateral extension in each case in one plane in all axial directions which is greater than five times the greatest wavelength used, the individual elevations are formed continuously in the three spatial axial directions and no edges, shoulders or jumps are formed on the elevations, no second-order surfaces are present on the elevations and no elevation of the surface structure has the same geometric shape and/or height and/or an identical volume which corresponds to a further elevation of the surface structure of the element.

2. The element according to claim 1, **characterized in that** the surface having the surface profile or the surface facing away from this surface is coated with a reflective coating.

3. The element according to any of the preceding claims, **characterized in that** it scatters electromagnetic radiation from the wavelength spectrum of visible light.

4. The element according to any of the preceding claims, **characterized in that** it is made of a material transparent to the electromagnetic radiation in the wavelength spectrum used.

5. A method of manufacturing an electromagnetic radiation diffusely scattering optical element according to any one of the preceding claims, **characterized in that** a surface profile designed for a wavelength spectrum in the range between 200 nm and 1200 nm and not forming a repetitive regular surface structure is calculated with a deterministic computational algorithm so that

elevations are formed which have a height with which a phase deviation $\Delta\varphi$ which is greater than two and a half times the largest wavelength used is achievable, and the elevations have a lateral extent in each plane in all axial directions which is greater than five times the largest wavelength used, and
the individual elevations are formed continuously in the three spatial axial directions and no edges, shoulders or jumps are formed on the elevations, and
there is no second-order surface at elevations and
the first derivative of the surface profile is continuous and
no elevation of the surface structure has the same geometric shape and/or height and/or volume corresponding to another elevation of the surface structure of the element, wherein
the calculation of the surface profile is carried out with an iterative Fourier transform algorithm, in which in the developed design algorithm the phase function is not optimized, but the surface profile with the size and height of elevations of the optical element subsequently manufactured thereafter is directly taken into account and differences in the phase function occurring during the iteration are determined and these are smoothed in an intermediate step and scaled if necessary, wherein over several iterations this phase difference is added locally and converted into a height difference and in the process also the absolute height of the surface modulation is adjusted so that the resulting phase difference is substantially greater than 2Π
and
this surface profile is formed with locally targeted material removal, by molding, (injection) casting, (injection) stamping from a tool.

**Revendications**

1. Élément optique dispersant de manière diffuse le rayonnement électromagnétique, à la surface duquel un profil de surface avec des élévations est présent, qui est conçu pour un spectre de longueurs d'onde dans la plage comprise entre 200 nm et 1 200 nm et qui ne forme pas de structure de surface régulière répétitive, dans lequel les élévations présentent une hauteur avec laquelle une amplitude de déphasage $\Delta\phi$, qui est supérieure à deux fois et demie la plus grande longueur d'onde utilisée, peut être atteinte et les élévations présentent une extension latérale dans respectivement un plan dans toutes les directions axiales qui est supérieure à cinq fois la plus grande longueur d'onde utilisée, les différentes élévations sont réalisées de manière continue dans les trois directions axiales dans l'espace et aucune arête, aucun épaulement ni aucun saut n'est réalisé sur les élévations, aucune surface de deuxième ordre n'est présente sur les élévations et aucune élévation de la structure de surface ne présente la même forme géométrique et/ou hauteur et/ou un même volume qui correspond à une autre élévation de la structure de surface de l'élément.

2. Elément selon la revendication 1, **caractérisé en ce que** la surface présentant le profil de surface ou la surface opposée à cette surface est revêtue d'un revêtement réfléchissant.

3. Elément selon l'une quelconque des revendications précédentes, **caractérisé en ce qu'**il disperse le rayonnement électromagnétique provenant du spectre de longueurs d'onde de la lumière visible.

4. Elément selon l'une quelconque des revendications précédentes, **caractérisé en ce qu'**il est constitué d'un matériau transparent au rayonnement électromagnétique dans le spectre de longueurs d'onde utilisé.

**5.** Procédé de fabrication d'un élément optique dispersant de manière diffuse le rayonnement électromagnétique selon l'une quelconque des revendications précédentes, **caractérisé en ce qu'**un profil de surface, qui est conçu pour un spectre de longueurs d'onde dans la plage comprise entre 200 nm et 1 200 nm et qui ne forme pas une structure de surface régulière répétitive, est calculé avec un algorithme de calcul déterministe de telle sorte que

des élévations sont réalisées, qui présentent une hauteur avec laquelle une amplitude de déphasage $\Delta\phi$ peut être atteinte, qui est supérieure à deux fois et demie la plus grande longueur d'onde utilisée, et les élévations présentent une extension latérale dans respectivement un plan dans toutes les directions axiales, qui est supérieure à cinq fois la plus grande longueur d'onde utilisée, et

les différentes élévations sont réalisées de manière continue dans les trois directions axiales dans l'espace et aucune arête, aucun épaulement ni aucun saut n'est réalisé sur les élévations, et

aucune surface de deuxième ordre n'est présente sur les élévations et

la dérivée première du profil de surface est continue et

aucune élévation de la structure de surface ne présente la même forme géométrique et/ou hauteur et/ou un même volume, qui correspond à une autre élévation de la structure de surface de l'élément, dans lequel

le calcul du profil de surface est effectué avec un algorithme itératif de transformation de Fourier, pour lequel, dans l'algorithme de conception développé, ce n'est pas la fonction de phase qui est optimisée, mais le profil de surface avec la taille et la hauteur des élévations de l'élément optique fabriqué ultérieurement par la suite qui est directement pris en compte, et les différences de la fonction de phase apparaissant pendant l'itération sont déterminées et celles-ci sont lissées et éventuellement mises à l'échelle dans une étape intermédiaire, dans lequel cette différence de phase est additionnée localement sur plusieurs itérations et convertie en une différence de hauteur et la hauteur absolue de la modulation de surface est alors également réglée de telle sorte que la différence de phase résultante soit sensiblement supérieure à $2\pi$ et

ce profil de surface est réalisé avec un enlèvement de matière ciblé localement, par moulage, coulée (par injection), estampage (par injection) d'un outil.

Fig. 1

Fig. 2

Phasenfunktion $\varphi$

$2\pi$

$0$

$p_1 > p_2$

Phasenverzögerung $\Delta\varphi$

$8\pi$

$0$

$\Delta n = n_2 - n_1$    Brechungsindexindexunterschied vom strukturierten Material zur Umgebung

Höhenprofil $h$

$n_1$

$n_2$

$\lambda_2$

$\lambda_1$

$\lambda_1 > \lambda_2$    Einfallendes Licht

Darstellung der Phasenverzögerung in einem optischen streuenden Element

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030214718 A1
- WO 2011149715 A1
- US 20120268964 A1
- US 20100177398 A1
- US 20060279679 A1
- US 2010167019 A1

**In der Beschreibung aufgeführte Nicht-Patentliteratur**

- Kontinuierliche Oberflächenprofile zur optischen Strahlformung. **LARS-CHRISTIAN WITTIG.** Dissertation. Rat der Physikalisch Astronomischen Fakultät, Friedrich Schiller Universität, 06. Juli 2005, 1-109